**Europäisches Patentamt**

**European Patent Office**

**Office européen des brevets**

(19)

(11) **EP 1 176 544 A1**

(12) **EUROPEAN PATENT APPLICATION**

(43) Date of publication:
**30.01.2002 Bulletin 2002/05**

(51) Int Cl.7: **G06K 9/44**

(21) Application number: **01305057.0**

(22) Date of filing: **11.06.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **27.07.2000 CN 00121976**<br><br>(71) Applicant: **LUCENT TECHNOLOGIES INC.**<br>**Murray Hill, New Jersey 07974-0636 (US)** | (72) Inventor: **Wu, Xiaoyun, PO Box 30-14<br>Shanghai 200030 (CN)**<br><br>(74) Representative:<br>**Watts, Christopher Malcolm Kelway, Dr. et al<br>Lucent Technologies NS UK Limited, 5<br>Mornington Road<br>Woodford Green Essex, IG8 0TU (GB)** |

(54) **One-step scanning thinning algorithm**

(57)     The present invention is directed to a thinning algorithm, and more particularly to a non-iterative thinning algorithm which assigns different weights to different pixels near the skeleton pixels and rules out impossible pixels. The present invention needs neither iteration on a pixel nor detection on every pixel; as a result, the processing time required is reduced. The present invention may also be utilized in conjunction with a filling algorithm. Experimental results with a variety of binary patterns show that the present invention is a high speed technique and achieves good skeleton shape compared with other conventional algorithms.

FIG. 4

## Description

## Background of the Invention

The present invention is directed to a thinning algorithm, and more particularly, to a one-step scanning thinning algorithm.

## Description of the Related Art

Thinning algorithms are popular in image processing, pattern recognition, feature detection, handwriting recognition, and counterfeit money recognition. The goal of a thinning algorithm is to search a binary image to obtain a "skeleton" from which a feature can be extracted, image expression style can be simplified, or storage space can be saved.

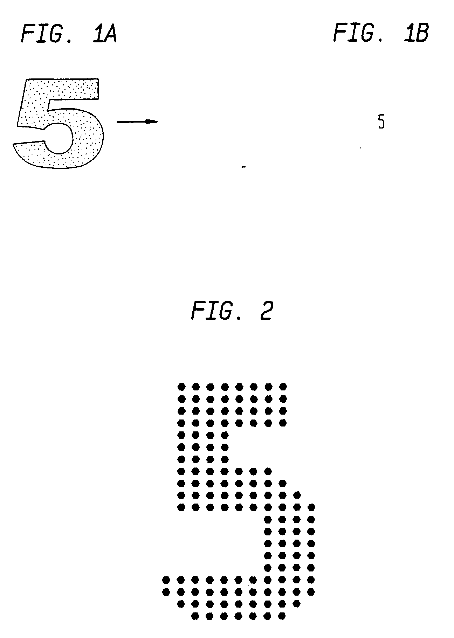

An example is illustrated in Figures 1(a) and 1(b). The Figure 1(a) character is thick; each stroke several pixels wide. The Figure 1(b) character is thin with a one-pixel width, but maintains the main feature(s) of the Figure 1 (a) character, so it is also recognized as a "5" (and not a "2", "A", or other character). Often during image processing or pattern recognition, the Figure 1(b) thinner character is preferred instead of the Figure 1(a) thicker character, because it maintains the main features of the image, occupies less storage memory, and is easier to recognize because the stroke width is substantially constant (one or two pixels wide). The conversion from Figure 1(a) to Figure 1(b) is termed a thinning process.

In most real world applications, images are much more complicated than this example, and as a result, thinning algorithms have been researching for many years. The two basic requirements for a thinning algorithm are 1) retain the main features which represent the original image and 2) maintain the connectivity.

The key step of most of conventional thinning algorithms is detecting edge-pixels, and then peeling off the edge pixels one by one. These conventional algorithms need to scan the image several times (based on the "width" of the image), and repeat the algorithm on each pixel. Figure 2 illustrates how these conventional algorithms work. The conventional thinning algorithms strip the edge pixels of the pattern. If the image is wide, this stripping process must be repeated several times from the left-top to right-bottom. The result of Figure 2 also may not be acceptable, because the thinning pattern is two pixels wide in some places.

Such a conventional method is disclosed in Lam L. and Sue C.Y., "A dynamic shape reserving thinning algorithm," Signal Processing, 1991, 22(2):199-208. This method is based on J. Hilditch, "Linear Skeleton from Square Cupboards," In Machine Intelligence IV, B. Meltzer and D. Michie, Eds. University Press, Edinburgh, pp. 403-420 (1969).

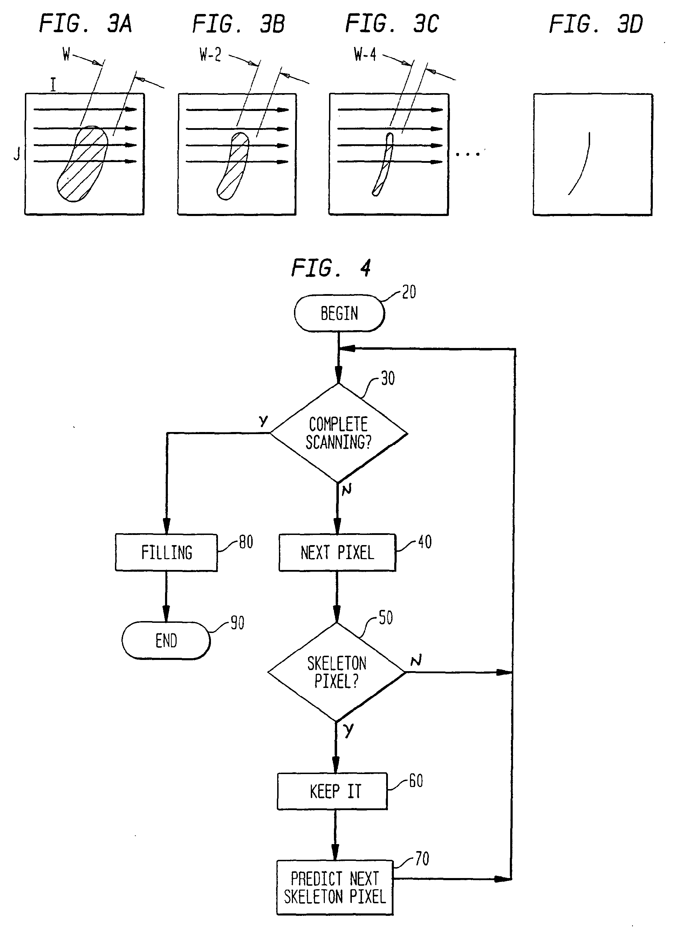

As stated above, since scanning for an entire image reduces the width of lines in the picture by one pixel from each side, the number of scannings to be repeated for the entire picture is about W/2 where W is the maximum line width contained in the image. This is illustrated in Figures 3A-3D. In this case, the number of scanning points P required for line-thinning is:

$$P = Sx\frac{W}{2}$$

where

S is the number of scanning points in an entire picture ($I \times J$);
W/2 is the repeated number of scannings of the entire image; and
W is the maximum line width in the entire image.

Even if there is only one area with a thick line or a solid black area in the image, this algorithm is required to repeatedly scan the entire image because of such an area, which, requires a large amount of processing time.

A second type of conventional methods include processing pixels from inner pixels to pixels at the edge to find the center pixels. This second class of techniques includes maximal squares (MS) and maximal circles (MC) techniques as described in Abairid M.R., Martin G. and Suen C.Y., "Tracing Center-lines of Digital Patterns Using Maximal-Square and Maximal-Circle Algorithm," Conf. On Version Interface '90, Nova Scotia, 1990, 76-79, for example. This second class of conventional methods does not save processing time because the same identification must be made at every pixel.

A third class of conventional methods include searching center pixels of every branch for each scanning line, and connecting the center pixels to obtain the skeleton of image. This third class of methods often does not maintain the connectivity of image.

## Summary of the Invention

The present invention is directed to a thinning algorithm, and more particularly to a non-iterative thinning algorithm which assigns different weights to different pixels near the skeleton pixels and rules out impossible pixels. The present invention needs neither iteration on a pixel nor detection on every pixel; as a result, the processing time required is reduced. The present invention may also be utilized in conjunction with a filling algorithm. Experimental results with a variety of binary patterns show that the present invention is a high speed technique and achieves good skeleton shape compared with other conventional algorithms.

## Brief Description of the Drawings

Figures 1A and 1B illustrate conventional characters.
Figure 2 illustrates a set of pixels which make up a character that may be processed by a conventional thinning algorithm.
Figures 3A-3D illustrate one conventional technique for obtaining the skeleton of an image.
Figure 4 illustrates a flowchart of the thinning algorithm of the present invention in one exemplary embodiment.
Figure 5 illustrates the direction detecting feature of the present invention in one exemplary embodiment of the present invention.
Figures 6(a)-6(c) illustrate the weight assignment feature in one exemplary embodiment of the present invention.
Figure 7 illustrates exemplary rules for identifying no-need-to-be-identified pixels (NIP).
Figures 8(a)-8(e) illustrate interpolation using a filling algorithm.

## Detailed Description of the Preferred Embodiments

As outlined above, the present invention is directed to a new thinning algorithm, which assigned different weights to different pixels near skeleton pixels and rules out impossible pixels in the thinning procedure. The present invention needs neither iteration on pixel nor detection on every pixel; as a result the processing time required is reduced. A filling algorithm may also be used in conjunction with the thinning algorithm of the present invention to produce better results. Experiment on a variety of binary patterns show that the present invention achieves high speed and a good skeleton shape compared with conventional algorithms.

The general algorithm of the present invention in an exemplary embodiment is illustrated in Figure 4. In step 20, the algorithm begins. In step 30, a decision is made whether scanning is completed or not. If not, the algorithm proceeds to the next pixel in step 40. If scanning is complete, the algorithm proceeds to a filling algorithm 80 and then is completed at step 90. In steps 40 and 50, the next pixel is analyzed to determine whether it is a skeleton pixel or not. If the next pixel is a skeleton pixel, it is kept in step 60 and a next skeleton pixel is predicted from that pixel in step 70. If the pixel of step 50 is not a skeleton pixel, the algorithm proceeds to step 30, in order to again ascertain whether scanning is complete.

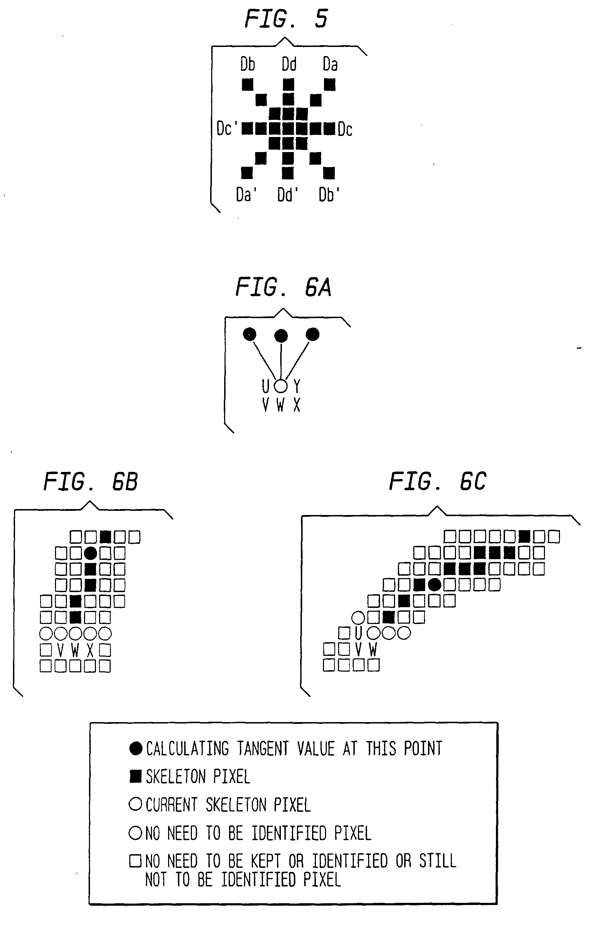

The operation of the one-step scanning thinning algorithm in one exemplary embodiment of the present invention will be described in more detail below in conjunction with Figures 5-8. A first operation step of the present algorithm includes detecting directions. Assuming there is a character, which is composed of several strokes. If a size-variable circle is present in the strokes, the connected center point of the inscribed circle should be part of the skeleton. However, connectivity may be lost at the connection of the strokes and interpolation may be necessary. The present invention alleviates this problem by identifying directional pixels (in the example in Figure 5, eight direction from an inner edge to an outer edge of the pattern, instead of identifying every pixel in the pattern).

The second operation step of the algorithm of the present invention is weight assignment. In particular, pixels in the pattern are separated into three types: skeleton pixels (SP), no-need-to-be-identified pixels (NIP), and no-flag pixels (NFP). Scanning the pixels from upper-left to bottom right, if the pixel is a NIP or SP, then the algorithm continues by identifying the next pixel. If the pixel is NFP, the present algorithm performs thinning based on an inscribed-circle algorithm. Further if the pixel is an SP and there is another SP in its 8 neighbor pixels, then a weight value is assigned to the 8 neighbor pixels according to the skeleton direction. The weight is the tangent value of the skeleton line, as shown in Figures 6(a)-6(c).

Because scanning is from upper-left to bottom-right, the next could-be-skeleton pixel is U, V, W, X, and Y. According to the skeleton line direction, three of these five pixels could be skeleton pixels as shown in the following exemplary prediction set (1). The value $\alpha$ is the included angle between a skeleton line and a horizontal line, and the elements in the set are put in weight order.

$$CS = \begin{cases} \{UVW\} & if\ 0° \leq \alpha < 22.5° \\ \{VUW\} & if\ 22.5° \leq \alpha < 45° \\ \{VWU\} & if\ 45° \leq \alpha < 67.5° \\ \{WVX\} & if\ 67.5° \leq \alpha < 90° \\ \{WXV\} & if\ 90° \leq \alpha < 112.5° \\ \{XWY\} & if\ 112.5° \leq \alpha < 135° \\ \{XYW\} & if\ 135° \leq \alpha < 157.5° \\ \{YXW\} & if\ 157.5° \leq \alpha < 180° \end{cases} \qquad (1)$$

The no-need-to-be-identified pixels (NIP) are determined by:

· If CS={WVX} or {WXV}

then the next possible skeleton pixel is identified in order of W, V, X or W, X, V, and pixels which are in the U and Y direction (horizontal) and within the inscribed circle are classified as no-need-to-be-identified pixels (NIP).

· If CS={UVW} or {YXW}

then the next could-be skeleton pixel is identified in order of U, V, W or Y, X, W, and pixels which are in the W direction (vertical) and within the inscribed circle are classified as no-need-to-be-identified pixels (NIP).

· If CS={VWU} or {VUW}

then the next could-be skeleton pixel is identified in order of V, W, U or V, U, W, and pixels which are in the X direction (slope is 1) and within the inscribed circle are classified as no-need-to-be-identified pixels (NIP).

· If CS={XWY} or {XYW}

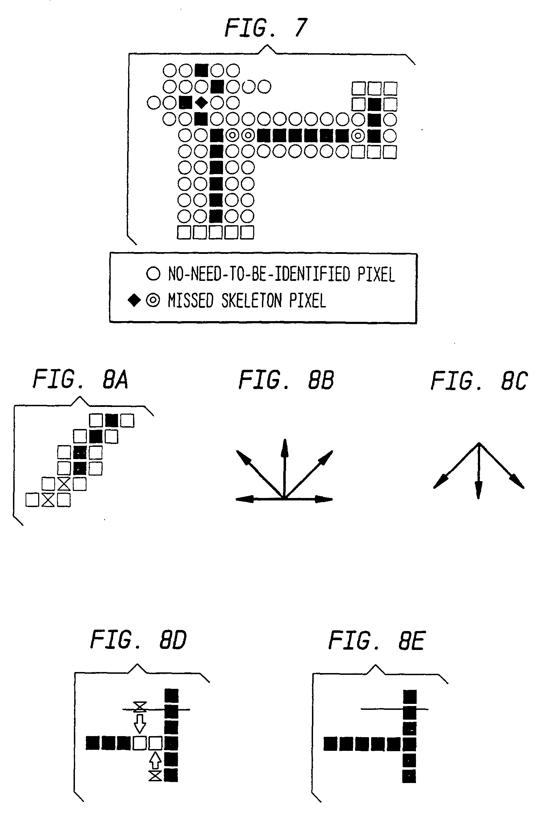

then the next could-be skeleton pixel is identified in order of X, W, Y or X, Y, W, and pixels which are in the V direction (slope is -1) and within the inscribed circle are classified as no-need-to-be-identified pixels (NIP). It is noted that the size of the inscribed circle may be obtained from the current skeleton pixel. Figure 7 illustrates exemplary rules for identifying the no-need-to-be-identified pixels (NIP).

The filling algorithm shown in step 80 of Figure 4 is described in more detail below. Skeleton pixels (SP) may be missed in some connection(s) or at uneven locations. A filling algorithm such as the one illustrated in Figures 8(a)-8(e) can be used to interpolate any missing skeleton pixels.

Figure 8(a) illustrates two interpolated pixels. Figure 8(b) illustrates up-interpolation directions. Figure 8(c) illustrates down-interpolation directions.

Using a conventional fill algorithm, the two pixels illustrated in Figure 8(d) can be filled in as illustrated in Figure 8(e). As shown in Figures 8(d) and (e), the direction of filling is determined by five skeleton pixels and filling terminates when an edge is met or a connection is made with another skeleton pixel.

As set forth above, the present invention is directed to a new faster thinning algorithm, which assigns different weights to different pixels near skeleton pixels and rules out impossible pixels in the thinning procedure. The algorithm in the present invention needs neither iteration on a pixel basis nor detection of every pixel. As a result, the time required to process the present algorithm is greatly reduced. The algorithm of the present invention may also be used in conjunction with a conventional filling algorithm for better results. Experiments on a variety of binary patterns have shown that the algorithm of the present invention is faster and obtains better skeleton shape compared with other conventional algorithms. Generally, the algorithm of the present invention saves at least two-thirds the time when compared with conventional algorithms and obtain good thinning results.

Although the present invention has been described as a method, the present invention may be implemented on any conventional computation hardware device. Further, the thinning algorithm described above may be resident in the computational hardware device on which it runs, loadable into the computation hardware device via a conventional physical medium, or, downloaded into the computational hardware device via a propagated signal.

## Claims

1. A non-iterative scanning thinning method, comprising:

   scanning a pixel in an image;
   determining whether the pixel is a skeleton pixel, a no-need-to-be-identified pixel, or a no-flag pixel;
   if the pixel is a skeleton pixel or a no-need-to-be-identified pixel, continue from upper-left to lower-right to the next pixel;
   if the pixel is a no-flag pixel, thin the no-flag pixel;
   if the pixel is a skeleton pixel, determining whether any pixels adjacent to the pixel are skeleton pixels; and
   if any pixels adjacent to the pixel are skeleton pixels, weighting the pixels adjacent to the pixel in accordance with a skeleton direction;
   repeating the above steps for each pixel to produce a thinned image of the image .

2. The method of claim 1, wherein no-need-to-be-identified pixels are identified using a prediction set.

3. The method of claim 1, wherein only one scanning iteration is necessary to classify each pixel.

4. The method of claim 1, wherein only one scanning iteration is necessary to produce the thinned image of the image.

5. A non-iterative scanning thinning method, comprising:

   scanning a pixel in an image;
   determining whether the pixel is a skeleton pixel;
   if the pixel is a skeleton pixel, assigning different weights to pixels adjacent the skeleton pixel to predict other skeleton pixels and to thin out unnecessary pixels; repeating the above steps for each pixel to produce a thinned image of the image.

6. The method of claim 5, wherein if the pixel is not a skeleton pixel, it is either a no-need-to-be-identified pixel, or a no-flag pixel

7. The method of claim 5, wherein no-need-to-be-identified pixels are identified using a prediction set.

8. The method of claim 5, wherein only one scanning iteration is necessary to classify each pixel.

9. The method of claim 5, wherein only one scanning iteration is necessary to produce the thinned image of the image.

10. A non-iterative scanning thinning apparatus, comprising:

    a processor for scanning a pixel in an image;
    determining whether the pixel is a skeleton pixel, a no-need-to-be-identified pixel, or a no-flag pixel;
    if the pixel is a skeleton pixel or a no-need-to-be-identified pixel, continue from upper-left to lower-right to the next pixel;
    if the pixel is a no-flag pixel, thin the no-flag pixel;
    if the pixel is a skeleton pixel, determining whether any pixels adjacent to the pixel are skeleton pixels; and
    if any pixels adjacent to the pixel are skeleton pixels, weighting the pixels adjacent to the pixel in accordance with a skeleton direction;
    repeating the above functions for each pixel to produce a thinned image of the image.

11. The apparatus of claim 10, wherein no-need-to-be-identified pixels are identified using a prediction set.

**12.** The apparatus of claim 10, wherein only one scanning iteration is necessary to classify each pixel.

**13.** The apparatus of claim 10, wherein only one scanning iteration is necessary to produce the thinned image of the image.

**14.** A non-iterative scanning thinning apparatus, comprising:

a processor for scanning a pixel in an image;
determining whether the pixel is a skeleton pixel;
if the pixel is a skeleton pixel, assigning different weights to pixels adjacent the skeleton pixel to predict other skeleton pixels and to thin out unnecessary pixels; repeating the above functions for each pixel to produce a thinned image of the image.

**15.** The apparatus of claim 14, wherein if the pixel is not a skeleton pixel, it is either a no-need-to-be-identified pixel, or a no-flag pixel.

**16.** The apparatus of claim 14, wherein no-need-to-be-identified pixels are identified using a prediction set.

**17.** The apparatus of claim 14, wherein only one scanning iteration is necessary to classify each pixel.

**18.** The apparatus of claim 14, wherein only one scanning iteration is necessary to produce the thinned image of the image.

**19.** The method of claim 1, wherein said method is executed by a computer program embodied on a medium.

**20.** The method of claim 19, wherein the medium is one of a physical medium and a propagated signal.

**21.** The method of claim 5, wherein said method is executed by a computer program embodied on a medium.

**22.** The method of claim 21, wherein the medium is one of a physical medium and a propagated signal.

FIG. 1A

FIG. 1B

FIG. 2

## FIG. 3A    FIG. 3B    FIG. 3C    FIG. 3D

## FIG. 4

## FIG. 5

Db    Dd    Da

Dc'        Dc

Da'   Dd'   Db'

## FIG. 6A

U  Y
V W X

## FIG. 6B

V W X

## FIG. 6C

U
V W

---

● CALCULATING TANGENT VALUE AT THIS POINT

■ SKELETON PIXEL

○ CURRENT SKELETON PIXEL

○ NO NEED TO BE IDENTIFIED PIXEL

□ NO NEED TO BE KEPT OR IDENTIFIED OR STILL
   NOT TO BE IDENTIFIED PIXEL

## FIG. 7

○ NO-NEED-TO-BE-IDENTIFIED PIXEL

◆ ◎ MISSED SKELETON PIXEL

## FIG. 8A

## FIG. 8B

## FIG. 8C

## FIG. 8D

## FIG. 8E

**European Patent**
**Office**

## PARTIAL EUROPEAN SEARCH REPORT

**Application Number**

which under Rule 45 of the European Patent Convention EP 01 30 5057
shall be considered, for the purposes of subsequent
proceedings, as the European search report

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHIANG J Y: "A NEW APPROACH FOR BINARY LINE IMAGE VECTORIZATION" 1995 IEEE INTERNATIONAL CONFERENCE ON SYSTEMS, MAN AND CYBERNETICS. VANCOUVER, OCT. 22 - 25, 1995, NEW YORK, IEEE, US, vol. 2, 22 October 1995 (1995-10-22), pages 1489-1494, XP000585996 ISBN: 0-7803-2560-5 * page 1491, right-hand column, paragraph 11 - page 1492, right-hand column, paragraph 2 * | 1-22 | G06K9/44 |

**TECHNICAL FIELDS SEARCHED (Int.Cl.7)**

G06K

### INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 31 October 2001 | Sonius, M |

EPO FORM 1503 03.82 (P04C07)

Claim(s) searched incompletely:
1-22

Reason for the limitation of the search:

The wording of claims 1-22 is such that a lack of clarity within the meaning of Article 84 EPC arises to such an extent as to render a meaningful search of the claims impossible

1. In claim 1 the following is not clear:

1.1 The purpose of a thinning method is to find the skeleton pixels of a shape. If pixels can be labelled as such as is done in steps 2 and 6, what is the need for further steps?

1.2 The exact nature of the differently labelled pixels, and the "weighting" and their functionality can only partly be understood, in particular it is not clear how the steps would result in a thinned shape. This is also not fully understandable from the description.

1.3 If in step 3 the pixel is determined to be a skeleton pixel, it would appear that steps 5 would never be reached.

1.4 It is not clear what is meant with "thin the no-flag pixel", only patterns or shapes can be thinned. Probably it is intended that these pixels are removed from the shape (inverted), however no clear support is found for this assumption in the description (page 5, line 7).

2. Above items 1.1 and 1.2 also apply to claim 5.

3. The above also applies accoringly to the corresponding apparatus claims 10 and 15

4. In dependent claims 3, 4, 8, 9, 12, 13, 17, 18 an attempt is made to define the invention by the object to be achieved, instead of its technical features.

5. Consequently, the search has been carried out (Rule 45 EPC) for those parts of the application which
do appear to be clear, namely the concept of using a skeleton direction estimate to guide the process of determining a skeleton.